# EUROPÄISCHE PATENTANMELDUNG

(11) **EP 2 484 485 A1**
(43) Veröffentlichungstag der Anmeldung: **08.08.2012**
(21) Anmeldenummer: 12160153.8
(22) Anmeldetag: 15.11.2005
(51) Int. Cl.: B23Q 3/157, B23Q 3/155

(54) **Verfahren und Systeme zum Be- und Entladen einer Werkzeugmaschine mit Werkzeugen**

(30) Priorität: 15.11.2004 AT 19022004
(62) Teilanmeldung aus: 05803064.4
(71) Anmelder: Muser, Josef, 8073 Neu-Seiersberg (AT)
(72) Erfinder: Muser, Josef, 8073 Neu-Seiersberg (AT)
(74) Vertreter: Babeluk, Michael

(57) **Zusammenfassung**

Die Erfindung betrifft ein Verfahren zum Be- und Entladen einer Werkzeugmaschine (5) mit Werkzeugen (3, 3'), bei dem die Werkzeuge (3, 3') aus einem Magazin (1) zunächst in einen Zwischenspeicher (11) übernommen werden und aus dem Zwischenspeicher (11) der Werkzeugmaschine (5) zugeführt werden. Erfindungsgemäß werden die Werkzeuge bei ihrer Übergabe vom Magazin an den Zwischenspeicher (11) oder bei ihrer Übergabe vom Zwischenspeicher (11) an die Werkzeugmaschine (5) um eine zu ihrer Längsachse unterschiedliche Achse verschwenkt. Weiters betrifft die Erfindung eine Vorrichtung zur Durchführung des Verfahrens.

## Beschreibung

Die Erfindung betrifft ein Verfahren zum Be- und Entladen einer Werkzeugmaschine mit Werkzeugen gemäß dem Oberbegriff von Patentanspruch 1.

Im Zusammenhang mit einem insbesondere automatisierten Be- und/oder Entladen einer Werkzeugmaschine, beispielsweise einer Fräsmaschine, ist es bekannt, mit Hilfe von insbesondere automatisierten und entlang mehrerer Achsen bewegbarer Vorrichtungen jeweils ein vorbereitetes Werkzeug durch eine mit einer Greifeinrichtung versehenen Vorrichtung aufzunehmen, worauf nach einem Bewegen der Vorrichtung zwischen einem Magazin bzw. Speicher zu einer Übergabeposition an der oder in die Werkzeugmaschine das zugeführte Werkzeug in der Werkzeugmaschine abgelegt bzw. angeordnet wird und üblicherweise über eine entsprechende Wechselvorrichtung von der Aufnahme- bzw. Übergabestation in die Werkzeugmaschine eingebaut wird. Gleichzeitig mit einer Aufnahme eines neuen Werkzeugs durch die Wechselvorrichtung der Werkzeugmaschine wird ein in einem unmittelbar vorangehenden Arbeitsschritt verwendetes Werkzeug an der Aufnahme- bzw. Übergabestation bzw. -position abgelegt und in weiterer Folge durch die insbesondere entlang mehrerer Achsen bewegbare Vorrichtung aufgenommen und wiederum zu einem Speicher bzw. Magazin rückgeführt. Derartige Verfahren und Systeme bzw. Vorrichtungen zum Be- und Entladen einer Werkzeugmaschine mit Werkzeug sind beispielsweise der DE 33 20 762 A, der DE 39 42 600 A, der DE 41 16 091 C, der DE 195 10 498 A oder der DE 299 02 127 U zu entnehmen. Nachteilig bei diesen bekannten Ausführungsformen ist insbesondere die Tatsache, dass bei Verwendung üblicherweise großer Magazine bzw. Speicher der Zeitraum für die Bewegung der Vorrichtung zwischen dem Speicher bzw. Magazin und der Übergabeposition bzw. unmittelbar der Werkzeugmaschine einen Zeitraum von beispielsweise 30 bis 120 s einnehmen kann, so daß insbesondere bei kürzeren Verwendungs- bzw. Prozesseingriffszeiten eines Werkzeugs die Werkzeugmaschine abwarten muss, bis die Vorrichtung ein neues Werkzeug nach einer Ablieferung eines unmittelbar vorher verwendeten Werkzeugs aufgenommen und wiederum in den Bereich der Werkzeugmaschine bzw. deren Übergabeposition transportiert hat.

Aus der DE 101 63 294 A ist ein Werkzeugwechselsystem für programmgesteuerte Fräs- und Bohrmaschinen bekannt, bei dem ein Zwischenspeicher vorgesehen ist, der als sternförmiges Übergabeelement ausgebildet ist. Dieser Zwischenspeicher dient somit gleichzeitig sowohl als Mittel zur Bereitstellung der jeweils nächsten benötigten Werkzeuge, als auch als Übergabeelement zur Manipulation der Werkzeuge selbst. Die konstruktive Ausführung eines solchen Zwischenspeichers ist aufgrund der komplexen Funktionalität aufwändig und es ergeben sich im Betrieb in bestimmten Situationen Probleme, da das Entnehmen von Werkzeugen aus dem Magazin und aus der Werkzeugmaschine vielfach nicht gleichzeitig durchgeführt werden kann, wenn die aktuelle Belegung des Zwischenspeichers dies nicht zulässt.

Eine weitere Lösung mit Zwischenspeichern ist in der DE 198 51 264 A offenbart. Der Werkzeugdurchsatz ist jedoch bei dieser Lösung beschränkt und die lineare Bewegung der Zwischenspeicher ist relativ aufwändig.

Aus der JP 08-187640 A ist eine Werkzeugwechselvorrichtung mit einem Matrixmagazin, einem Zwischenspeicher und einer als ATC gebildeten Wechselvorrichtung bekannt. Mit einer solchen Vorrichtung werden hohe Werkzeugdurchsätze erzielt, der Platzbedarf ist jedoch sehr groß. Weiters ist aus der US 4,701,994 A eine automatische Werkzeugmaschine bekannt, die ein Revolvermagazin aufweist. In einem solchen Magazin kann nur eine relativ geringe Anzahl von Werkzeugen gelagert werden.

Aufgabe der vorliegenden Erfindung ist es, diese Nachteile zu vermeiden und das oben beschriebene Verfahren so weiterzubilden, dass der apparative Aufwand so gering als möglich gehalten werden kann. Eine weitere Aufgabe der Erfindung ist es, im größtmöglichen Umfang bewährte Prozesse und Komponenten einzusetzen, um den Entwicklungsaufwand möglichst gering zu halten. Jedenfalls sollen aber minimale Übergabezeiten realisiert werden. Letztlich ist es eine Aufgabe der Erfindung, eine Vorrichtung zur Durchführung des Verfahrens anzugeben, die die obigen Anforderungen erfüllt. Insbesondere soll eine möglichst platzsparende Lösung für die Werkzeugmaschine einschließlich Magazin erzielt werden.

Erfindungsgemäß werden diese Aufgaben durch die Merkmale von Patentanspruch 1 gelöst. Wichtig ist zum einen die Trennung der Funktionalität des Zwischenspeichers von der eigentliche Werkzeugübergabe an die Werkzeugmaschine bei gleichzeitiger Nutzung des bewährten Systems des gleichzeitigen Auswechselns der Werkzeuge durch einen sogenannten ATC (Automatic Tool Changer). Durch ein solches Verfahren werden die oben beschriebenen Anforderungen in optimaler Weise erfüIIt.Wesentlich ist, dass durch das Verschwenken der Werkzeuge ein Matrixmagazin platzsparend angeordnet werden kann, so dass eine kompakte Ausführung der Maschine möglich ist.

Eine konstruktiv besonders einfache und zuverlässige Ausführungsvariante des erfindungsgemäßen Verfahrens ist gegeben, wenn die Wechselvorrichtung bei der Übergabe eine Drehbewegung ausführt.

Ein besonders vorteilhafter und effizienter Ablauf des erfindungsgemäßen Verfahrens kann dadurch erreicht werden, dass vor, bzw. nach der Übergabe der Werkzeuge von der Wechselvorrichtung an die Werkzeugmaschine eine Übergabe von Werkzeugen aus dem Magazin an den Zwischenspeicher und umgekehrt erfolgt. Insbesondere ist es dabei günstig, wenn der Zwischenspeicher bei der Übergabe von Werkzeugen an das Magazin eine Drehbewegung ausführt.

Dadurch, dass erfindungsgemäß eine geringe Anzahl von Werkzeugen in einem Zwischenspeicher in der Nähe der Werkzeugmaschine bzw. deren Übergabestation vorbereitet und gespeichert wird, wird ermöglicht, dass selbst bei kurzen Eingriffs- bzw. Verwendungszeiten eines Werkzeugs über eine entsprechende, an sich bekannte Wechselvorrichtung ein Austausch eines neu einzusetzenden Werkzeugs gegen ein in einem vorangehenden Arbeitsschritt eingesetztes Werkzeug lediglich durch die überaus rasche bzw. kurze Einsatzzeit der Wechselvorrichtung an der Werkzeugmaschine beeinflusst bzw. bestimmt wird und unabhängig von der Manipulationszeit ist, welche zwischen der Werkzeugmaschine bzw. der Übergabeposition der Vorrichtung und dem zugeordneten Speicher bzw. Magazin arbeitet. Es werden somit durch die Manipulationszeit der zwischen der Werkzeugmaschine und dem Speicher vorgesehenen Vorrichtung bedingte Stillstandszeiten vermieden, so dass bei Vorsehen bzw. Vorbereiten einer entsprechenden Vielzahl von Werkzeugen in dem Zwischenspeicher in der Nähe der Werkzeugmaschine bzw. der Übergabeposition auch Arbeiten mit überaus kurzen Einsatzzeiten von Werkzeugen in einer Werkzeugmaschine ermöglicht werden. Darüber hinaus ergibt die erfindungsgemäße Verfahrensführung auch bei Einsatz bzw. Verwendung mit längeren Verwendungs- bzw. Taktzeiten eines Werkzeugs Vorteile im Hinblick auf einen raschen bzw. unmittelbaren Wechsel eines Werkzeugs einer Werkzeugmaschine.

Ein derartiger rascher Wechsel zwischen in einer Werkzeugmaschine einzusetzenden Werkzeugen wird weiter dadurch begünstigt, dass nach einem Einsatz ein Werkzeug in den Zwischenspeicher aus der Werkzeugmaschine bzw. deren Übergabestation ausgebracht wird, wie dies einer weiters bevorzugten Ausführungsform des erfindungsgemäßen Verfahrens entspricht. Es wird somit erfindungsgemäß nicht nur vorgeschlagen, einzusetzende Werkzeuge in dem Zwischenspeicher in der Nähe der Werkzeugmaschine bzw. deren Übergabeposition vorzubereiten und zu speichern, sondern es erfolgt insbesondere unter Einsatz von kurzen Wegen und somit kurzen Bewegungszeiten der Wechselvorrichtung an der nachgeschalteten Werkzeugmaschine auch eine rasche und vereinfachte Übergabe eines in einem vorangehenden Arbeitsschritt eingesetzten Werkzeugs, so dass der Wechselvorgang weiter beschleunigt werden kann.

Zur weiteren Vereinfachung und Beschleunigung der Aufnahme bzw. Übergabe von Werkzeugen in eine Werkzeugmaschine wird gemäß einer weiters bevorzugten Ausführungsform vorgeschlagen, dass die Werkzeuge im Zwischenspeicher entsprechend ihrer Aufeinanderfolge eines Einsatzes in der Werkzeugmaschine gespeichert werden. Dadurch, dass erfindungsgemäß die Werkzeuge im Zwischenspeicher entsprechend ihrer zeitlichen Aufeinanderfolge eines Einsatzes gespeichert werden, wird sichergestellt, dass mit einem einfach aufzubauenden Zwischenspeicher das Auslangen gefunden wird, welcher beispielsweise schrittweise bewegt bzw. betätigt werden kann, so dass nach Entnahme eines im Zwischenspeicher gespeicherten Werkzeugs und günstiger Weise gleichzeitiger Übergabe eines unmittelbar vorangehend eingesetzten Werkzeugs in den Zwischenspeicher durch eine einfache, beispielsweise schrittweise Bewegung des Zwischenspeichers entsprechend der Anzahl von Aufnahmepositionen im Zwischenspeicher ein für einen nächsten Arbeitsschritt zum Einsatz gelangendes Werkzeug unmittelbar in den Bereich der Wechselvorrichtung der nachgeschalteten Werkzeugmaschine gebracht werden kann, ohne das eine aufwendige Steuerung für den Antrieb des Zwischenspeichers erforderlich wäre.

Für eine besonders einfache und zuverlässige Handhabung der Werkzeuge wird gemäß einer weiters bevorzugten Ausführungsform vorgeschlagen, dass die Werkzeuge über Adapter in dem Zwischenspeicher aufgenommen und gespeichert werden. Durch Verwendung derartiger Adapter ergibt sich zum einen eine Schonung der Werkzeuge bzw. deren Aufnahmeelemente, wobei insbesondere unter Berücksichtigung der Tatsache, dass im Wesentlichen genormte Aufnahmeelemente der einzelnen Werkzeuge zum Einsatz in Werkzeugmaschinen vorgesehen sind, mit genormten Adaptern das Auslangen gefunden werden kann, so dass auch sämtliche Manipulationseinrichtungen bzw. -Vorrichtungen zwischen dem Magazin und dem Zwischenspeicher als auch zwischen dem Zwischenspeicher und dem Einsatz in der Werkzeugmaschine entsprechend auf die Verwendung einer einheitlichen Ausführung eines Adapters angepasst werden können.

Unter Berücksichtigung der Tatsache, dass durch Vorsehen des Einsatzes eines Zwischenspeichers kurze Wechselzeiten im Bereich der Wechselvorrichtung der Werkzeugmaschine ermöglicht werden, kann auf besondere Maßnahmen zur Beschleunigung der Bewegung der zwischen dem Magazin bzw. Speicher und dem Zwischenspeicher arbeitenden Vorrichtung verzichtet werden. Darüber hinaus kann die bei Vorsehen einer entsprechenden Anzahl von Aufnahmepositionen in dem Zwischenspeicher zur Verfügung stehenden Zeit auch für eine unmittelbare Überprüfung eines eingesetzten Werkzeugs nach einem Ausbringen aus der Werkzeugmaschine eingesetzt werden, da davon auszugehen ist, dass eine ausreichende Anzahl von nachfolgend einzusetzenden Werkzeugen selbst bei kurzen Takt- bzw. Einsatzzeiten bereits im Zwischenspeicher vorbereitet wurde. In diesem Zusammenhang wird gemäß einer weiters bevorzugten Ausführungsform des erfindungsgemäßen Verfahrens vorgeschlagen, dass nach einem Einsatz die Werkzeuge vor einer Rückführung in das Magazin einer Überprüfung und/oder Vermessung insbesondere unter Verwendung einer der Achsen der Transportvorrichtung unterworfen werden. Es kann somit unmittelbar nach einer Entnahme eines unmittelbar vorher eingesetzten Werkzeugs aus dem Zwischenspeicher dieses einer Überprüfung oder Vermessung durch die zwischen dem Magazin bzw. Speicher und dem Zwischenspeicher arbeitende Übergabevorrichtung insbesondere unter Verwendung einer der Achsen der Transportvorrichtung zugeführt werden, so dass zusätzliche Arbeitsschritte im Hinblick auf eine nachträgliche Entnahme eines Werkzeugs aus dem Magazin bzw. Speicher und Zuführen zu einer entsprechenden Überprüfung und/oder Vermessung als auch zusätzliche Justierschritte vermieden werden können. Eine derartige zusätzliche Handhabung eines Werkzeugs wird in Fällen erforderlich, in welchen gemäß dem bekannten Stand der Technik unmittelbar ein Transport zwischen dem Magazin bzw. Speicher und der Übergabestation bzw. der Werkzeugmaschine vorgenommen wird, wobei, wie dies oben erwähnt wurde, insbesondere bei kurzen Einsatz- bzw. Taktzeiten eines Werkzeugs in der Werkzeugmaschine entsprechend große Stillstandszeiten anfallen würden.

Weiters betrifft die vorliegende Erfindung ein System gemäß Patentanspruch 8.

Wie oben bereits erwähnt, ermöglicht das Vorsehen eines Zwischenspeichers ein Vorbereiten und Speichern einer entsprechenden Anzahl von demnächst zum Einsatz gelangenden Werkzeugen, so dass bei entsprechend rasch arbeitenden Wechselvorrichtungen im Bereich der Werkzeugmaschine keine Stillstandszeiten der Werkzeugmaschine auch bei kurzen Takt- bzw. Einsatzzeiten von Werkzeugen zu befürchten sind.

Gemäß einer weiters bevorzugten Ausführungsform wird zur weiteren Beschleunigung des Wechselvorgangs vorgeschlagen, dass in dem Zwischenspeicher ein Werkzeug nach einem Einsatz in die Werkzeugmaschine aufnehmbar ist.

Zur Ausbildung eines besonders einfach zu handhabenden Zwischenspeichers wird darüber hinaus vorgeschlagen, dass die Werkzeuge in ihrer zeitlichen Abfolge eines Einsatzes in der Werkzeugmaschine in dem Zwischenspeicher aufnehmbar sind, wie dies einer weiters bevorzugten Ausführungsform des erfindungsgemäßen Systems entspricht.

Zur einfachen Aufnahme und Handhabung des Zwischenspeichers wird für diesen gemäß einer weiters bevorzugten Ausführungsform vorgeschlagen, dass der Zwischenspeicher von einem scheiben-, teller- oder kettenartigen Element gebildet ist, welches eine Mehrzahl von Aufnahmeeinrichtungen bzw. -öffnungen zur Aufnahme von Werkzeugen aufweist. Ein derartiger scheiben-, teller- oder kettenartiger Zwischenspeicher lässt sich entsprechend kompakt und somit platzsparend im Bereich der Übergabeposition bzw. -station oder unmittelbar an der Werkzeugmaschine vorsehen und auch entsprechend leicht handhaben. Darüber hinaus ermöglicht ein derartiger scheiben-, teller- oder kettenförmiger Zwischenspeicher ein einfaches Vorsehen von entsprechenden Aufnahmeelementen zur Aufnahme der Werkzeuge und eine einfache Entnahme derselben durch die Wechselvorrichtung der Werkzeugmaschine.

Gemäß einer weiters bevorzugten Ausführungsform wird vorgeschlagen, dass Adapter zur Aufnahme der Werkzeuge aus dem Magazin sowie zur Lagerung bzw. Aufnahme in dem Zwischenspeicher vorgesehen sind, wobei derartige Adapter nicht nur eine vereinfachte Handhabung der Werkzeuge, sondern auch eine entsprechende Schonung derselben ermöglichen.

Zur Bereitstellung einer großen Anzahl von in einer Werkzeugmaschine für unterschiedlichste Arbeitsvorgänge einzusetzenden Werkzeugen wird erfindungsgemäß vorgeschlagen, dass das Magazin bzw. der Speicher von einem an sich bekannten Matrixmagazin gebildet ist. Ein derartiges Matrixmagazin ermöglicht in platzsparender und kostensparender Weise die Bereitstellung einer Vielzahl von Werkzeugen, welche durch entsprechende automatisierte Vorrichtungen bzw. Roboter gehandhabt werden können.

Wie oben bereits erwähnt, ermöglicht das Vorsehen eines Zwischenspeichers, welcher insgesamt kurze Wechselzeiten an der Werkzeugmaschine ermöglicht und Stillstandszeiten unter Berücksichtigung der für eine Bewegung der Manipulationsvorrichtung zwischen dem Magazin bzw. Speicher und der Werkzeugmaschine vermeidet, auch eine unmittelbare Überprüfung bzw. Vermessung eines eingesetzten Werkzeugs. In diesem Zusammenhang gemäß einer weiters bevorzugten Ausführungsform des erfindungsgemäßen Systems vorgeschlagen, dass zusätzlich eine Vorrichtung zum Überprüfen und/oder Vermessen eines Werkzeugs nach einem Einsatz vorgesehen ist. Derartige Einrichtungen zum Überprüfen und/oder Vermessen lassen sich im Bereich des Magazins bzw. Speichers anordnen und sind unmittelbar durch die zwischen dem Magazin bzw. Speicher und der Werkzeugmaschine eingesetzte Übergabevorrichtung erreichbar.

Für eine Automatisierung eines Tauschs bzw. Austauschs von Werkzeugen wird gemäß einer weiters bevorzugten Ausführungsform vorgeschlagen, dass zusätzlich eine Eintrags- und Ausbringvorrichtung für verbrauchte bzw. beschädigte Werkzeuge und neue Werkzeuge vorgesehen ist.

Wie oben bereits erwähnt, werden für eine Manipulation der Werkzeuge weitgehend automatisierte Vorrichtungen eingesetzt, wobei gemäß einer weiters bevorzugten Ausführungsform vorgeschlagen wird, dass die Vorrichtung zum Transportieren der Werkzeuge in an sich bekannter Weise von einem automatisch gesteuerten Roboter gebildet ist.

In der Folge wird die vorliegende Erfindung anhand der in den Figuren dargestellten Ausführungsbeispiele näher erläutert. Es zeigen:
- Fig. 1: eine schematische Draufsicht auf ein erfindungsgemäßes System;
- Fig. 2: eine seitliche Ansicht des Systems von Fig. 1;
- Fig. 3: eine schematische axonometrische Darstellung eines Details des Systems der Fig. 1 und Fig. 2; und
- Fig. 4: eine axonometrische Darstellung einer alternativen Ausführungsvariante eines erfindungsgemäßen Systems.

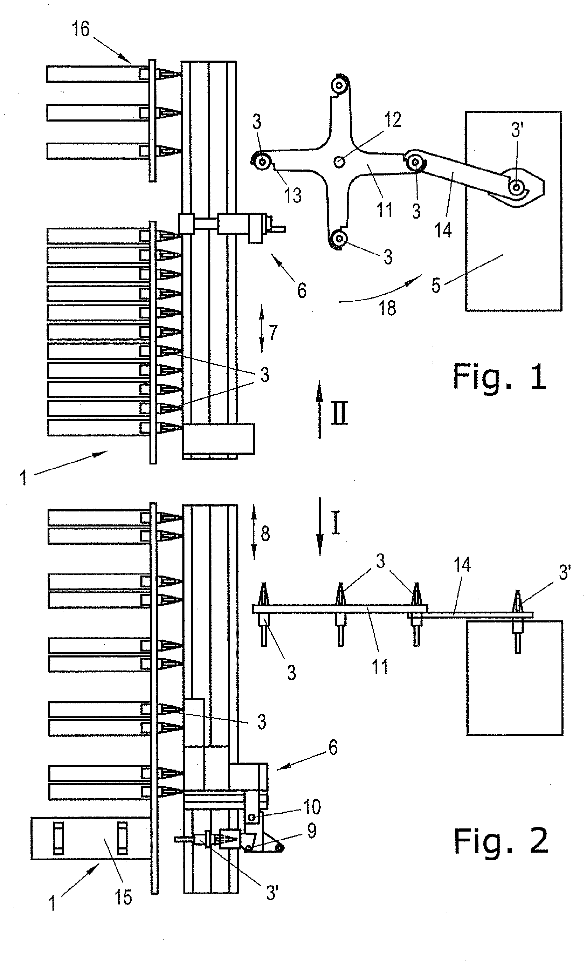

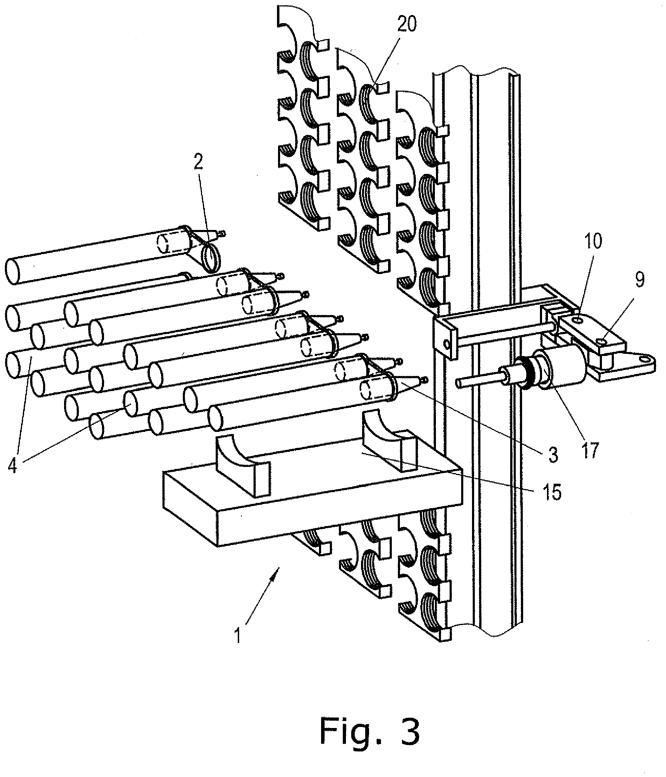

In den Zeichnungen ist allgemein mit 1 ein Speicher bzw. Magazin bezeichnet, wobei in einer Mehrzahl von Aufnahmeöffnungen, die insbesondere in Fig. 3 ersichtlich sind und jeweils mit 2 bezeichnet sind, eine Vielzahl von Werkzeugen 3 in entsprechenden Lager- bzw. Speicherelementen 4 gelagert sind. Ein derartiger Speicher bzw. ein derartiges Magazin 1 kann insbesondere von einem Matrixmagazin gebildet sein, in welchem in einem X-Y-Koordinatensystem eine Vielzahl von Werkzeugen 3, beispielsweise die schematisch in Fig. 2 und Fig. 3 angedeuteten Bohrer, gelagert ist.

Zur Entnahme der Werkzeuge 3 aus dem Magazin bzw. Speicher 1 und zur Übergabe in eine in Fig. 1 schematisch mit 5 bezeichnete Werkzeugmaschine ist eine allgemein mit 6 bezeichnete Vorrichtung vorgesehen, welche entlang mehrerer Achsen und/oder Richtungen bewegbar und/oder verschwenkbar ist, wobei eine Bewegung in horizontaler Richtung in Fig. 1 mit dem Doppelpfeil 7 angedeutet ist, eine Bewegung in vertikaler Richtung durch einen Doppelpfeil 8 in Fig. 2 angedeutet ist und die Vorrichtung 6 wenigstens zwei Schwenkachsen 9 und 10 aufweist, wie dies in Fig. 2 und Fig. 3 angedeutet ist. Derart lässt sich durch eine derartige Vorrichtung bzw. einen Manipulator 6 ein Werkzeug 3 aus dem Magazin 1 aufnehmen und entsprechend handhaben.

In dem in Fig. 1 und Fig. 2 dargestellten System ist zwischen dem Magazin 1 und der Werkzeugmaschine 5 ein Zwischenspeicher 11 vorgesehen, welcher in der dargestellten Ausführungsform von einem scheiben- bzw. tellerartigen Element gebildet ist, welches um eine schematisch mit 12 bezeichnete Achse drehbar ist. Der Zwischenspeicher 11 weist eine Mehrzahl von insbesondere äquidistant beabstandeten Aufnahmepositionen bzw. -öffnungen 13 auf, in welchen jeweils ein Werkzeug 3 aufnehmbar ist. Aus dem Zwischenspeicher 11 wird über eine schematisch mit 14 angedeutete Wechselvorrichtung ein Werkzeug 3 entnommen und in dem Bereich der Werkzeugmaschine 5 angeordnet bzw. in die Werkzeugmaschine 5 eingesetzt, um damit ein nicht näher dargestelltes Werkstück zu bearbeiten. Der in Fig. 1 und Fig. 2 dargestellte Wechsler ist eine sogenannte Doppelwechselvorrichtung 14, mit welcher gleichzeitig ein Werkzeug 3 aus dem Zwischenspeicher 11 entnommen wird und ein unmittelbar vorangehend eingesetztes Werkzeug aus der Werkzeugmaschine entfernt wird, welches in Fig. 1 und Fig. 2 mit 3' bezeichnet ist.

Es kann somit in einem äußerst kurzen und raschen Wechselvorgang ein vorbereitetes bzw. gespeichertes Werkzeug 3 aus dem Zwischenspeicher 11 entnommen werden und unmittelbar in die Werkzeugmaschine 5 übergeben werden, wobei der rasche Wechselvorgang über die Wechselvorrichtung 14 unabhängig von der Dauer einer Bewegung der Vorrichtung 6 zwischen einem gegebenenfalls überaus große Abmessungen aufweisenden Magazin 1 und dem Zwischenspeicher 11 ist.

Nach einem Wechsel eines neu einzusetzenden Werkzeugs 3 gegen ein in einem vorangehenden Arbeitsschritt eingesetztes Werkzeug 3' erfolgt eine Entnahme eines jeweils bereits verwendeten Werkzeugs aus dem Zwischenspeicher 11 durch die Vorrichtung 6 und eine unmittelbare Rückführung in das Magazin bzw. den Speicher 1.

Unter Berücksichtigung der Tatsache, dass selbst bei kurzen Takt- bzw. Einsatzzeiten eines Werkzeugs 3 in der Werkzeugmaschine 5 durch Bereitstellen einer vorbereiteten Anzahl von insbesondere in zeitlicher Sequenz eines Einsatzes in der Werkzeugmaschine 5 angeordneten Werkzeugen 3 die für einen Wechsel eines Werkzeugs 3 erforderliche Zeit unabhängig von der Dauer der Bewegung der Vorrichtung 6 ist, da nicht unmittelbar eine Übergabe zwischen der Vorrichtung 6 und der Wechselvorrichtung 14 für den Einsatz eines neuen Werkzeugs vorgenommen werden muss, kann ein bereits eingesetztes Werkzeug 3' beispielsweise nach einer Entnahme aus dem Zwischenspeicher 11 einer Überprüfung und/oder Vermessung zugeführt werden, wie dies in Fig. 2 und Fig. 3 durch eine entsprechende Vorrichtung 15 angedeutet ist. In der Vorrichtung 15 kann beispielsweise unter Einsatz eines nicht näher dargestellten Lasermessgeräts die Ausrichtung und/oder weitere Einsetzbarkeit eines bereits verwendeten Werkzeugs 3' insbesondere unter Verwendung einer der Achsen der Transportvorrichtung überprüft werden.

Falls die Überprüfung eines bereits eingesetzten Werkzeugs 3' erfolgreich abgeschlossen ist, erfolgt eine Rückführung des Werkzeugs 3' an den entsprechenden Speicherplatz in dem gegebenenfalls großvolumigen Matrixmagazin 1.

In Fig. 1 ist darüber hinaus schematisch eine Eintrags- und Ausbringvorrichtung bzw. -station mit 16 angedeutet, in welcher beispielsweise verbrauchte Werkzeuge abgelegt und gegebenenfalls manuell durch neue Werkzeuge ersetzt werden kann. Derartige Werkzeuge können aus der Eintrags- und Ausbringvorrichtung 16 nachfolgend in das eigentliche Matrixmagazin 1 übergeführt werden.

In den Figuren ist darüber hinaus angedeutet, dass die einzelnen Werkzeuge 3 in entsprechenden Adaptern 17 aufgenommen sind, wodurch beispielsweise eine schonende Aufnahme und Übergabe der einzelnen Werkzeuge 3 vorgenommen werden kann. Unter Berücksichtigung der Tatsache, dass entsprechende Aufnahmeelemente der Werkzeuge 3, welche üblicherweise von einem genormten bzw. standarisierten Kegel gebildet sind, entsprechend vereinheitlicht sind, kann auch mit einer vereinheitlichten Ausführungsform eines Adapters 17 das Auslangen gefunden werden und somit auch die Aufnahmeelemente der einzelnen Transportvorrichtungen 6 und 14 sowie der Aufnahmeöffnungen 13 des Zwischenspeichers 11 entsprechend an die Form der Adapter 17 angepasst werden.

Anstelle des in Fig. 1 und Fig. 2 dargestellten, scheiben- bzw. tellerförmigen Zwischenspeichers 11 mit in Fig. 1 und Fig. 2 dargestellten Aufnahmepositionen bzw. -öffnungen 13, welche am Ende von Armen des scheiben- bzw. tellerförmigen Zwischenspeichers 11 angeordnet sind, kann auch beispielsweise ein im Wesentlichen kreisrunder Zwischenspeicher 11 verwendet werden, welcher an seinem Außenumfang eine entsprechende Anzahl von Aufnahmeöffnungen bzw. -positionen 13 aufweist. Alternativ kann als Zwischenspeicher ein Kettenelement eingesetzt werden, welches an seinem Umfang entsprechende Aufnahmeelemente aufweist.

Ein Antrieb für den Zwischenspeicher 11 und die Achse 12 ist in den Figuren der Einfachheit halber weggelassen. Insbesondere für den Fall, dass im Zwischenspeicher 11 entsprechend der zeitlichen Abfolge der Werkzeuge die Werkzeuge 3 aufgenommen sind, kann durch eine schrittweise Bewegung entsprechend dem Abstand benachbarter Aufnahmeöffnungen 13 beispielsweise im Sinn des Pfeils 18 in Fig. 1 durch ein einfaches Verschwenken bzw. Verdrehen des Zwischenspeichers 11 jeweils nach einer Aufnahme eines in einem vorangehenden Arbeitsschritt eingesetzten Werkzeugs 3' eine Positionierung eines nachfolgenden Werkzeugs 3 in dem Bereich der Zugriffsposition der Wechselvorrichtung 14 erfolgen.

Insbesondere in Fig. 3 ist darüber hinaus angedeutet, dass der Speicher bzw. das Magazin 1 beispielsweise aus einem Schichtaufbau von Blechen gebildet ist, wie dies in Fig. 3 schematisch mit 20 angedeutet ist. Derartige Bleche können in einfacher Weise und kostengünstig wasserstrahlgeschnitten oder mit Laser behandelt sein und nachträglich zu einer entsprechenden Speicherkonfiguration 1 zusammengebaut werden. Derart lässt sich auch eine Anpassung bzw. Erweiterung an erforderliche Aufnahmekapazitäten vornehmen.

Darüber hinaus ist insbesondere aus Fig. 1 und Fig. 2 ersichtlich, dass neben der Möglichkeit einer Vorbereitung und Speicherung einer geringen Anzahl von insbesondere in zeitlicher Aufeinanderfolge einzusetzenden Werkzeugen 3 im Zwischenspeicher 11 durch den Zwischenspeicher 11 auch entsprechend kurze Transportwege sowohl zu dem Magazin bzw. dem Speicher 1 als auch dem Zwischenspeicher 11 und der Wechselvorrichtung 14 der Werkzeugmaschine 5 zur Verfügung gestellt werden können, so dass auch hierdurch bei einem Tausch eines Werkzeugs 3 erforderliche Wechselzeiten bzw. Stillstandszeiten der Werkzeugmaschine 5 entsprechend reduziert bzw. minimiert werden können.

Abweichend von dem in den Figuren dargestellten Magazin bzw. Speicher, welches(r) insbesondere als Matrixmagazin 1 ausgebildet ist, können selbstverständlich andere Ausführungsformen eines Magazins, wie beispielsweise ein Turmmagazin mit drehbarem Turmspeicher oder ähnliche Magazine 1, verwendet werden, aus welchen wiederum mit einer Vorrichtung 6 Werkzeuge entnehmbar sind und einem Zwischenspeicher 11 zuführbar sind, welcher in der Nähe der Werkzeugmaschine 5 bzw. einer Übergabestation bzw. -position derselben angeordnet ist.

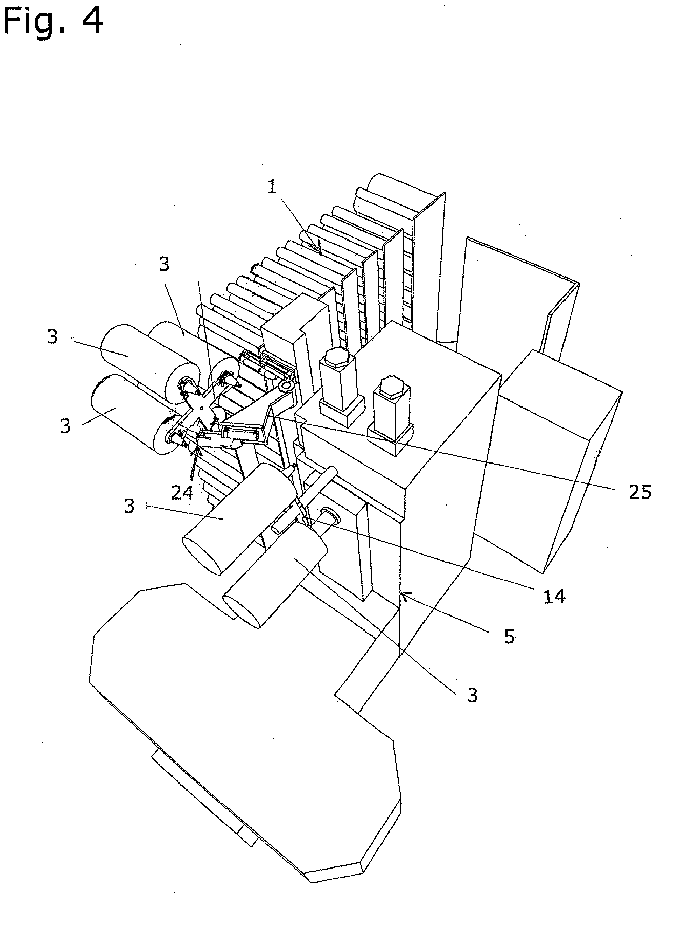

Bei der Ausführungsvariante von Fig. 4 ist das Magazin 1 aus Platzgründen gegenüber der Werkzeugmaschine 5 verschwenkt, so dass auch die Werkzeuge 3, 3' auf ihrem Weg zwischen Magazin 1 und Werkzeugmaschine 5 um eine Achse verschwenkt werden müssen, die senkrecht zu ihrer Längsachse ist. Eine Schwenkeinrichtung 24 besitzt einen Schwenkhebel 25, um die Werkzeuge 3, 3' aus dem Zwischenspeicher 11 zu entnehmen, zu verschwenken und der Wechselvorrichtung 14 zuzuführen.

## Patentansprüche

1. Verfahren zum Be- und Entladen einer Werkzeugmaschine (5) mit Werkzeugen (3, 3'), bei dem die Werkzeuge (3, 3') aus einem Magazin (1) zunächst in einen Zwischenspeicher (11) übernommen werden und aus dem Zwischenspeicher (11) der Werkzeugmaschine (5) zugeführt werden, wobei die Werkzeuge (3, 3') bei der Übergabe an die Werkzeugmaschine (5) über eine Wechselvorrichtung (14) gleichzeitig aus dem Zwischenspeicher (11) und der Werkzeugmaschine (5) entnommen, bzw. in diese eingesetzt werden, **dadurch gekennzeichnet, dass** die Werkzeuge (3, 3') bei ihrer Übergabe vom Magazin (1) an den Zwischenspeicher (11) oder bei ihrer Übergabe vom Zwischenspeicher (11) an die Werkzeugmaschine (5) um eine zu ihrer Längsachse unterschiedliche Achse verschwenkt werden.

2. Verfahren nach Anspruch 1, **dadurch gekennzeichnet, dass** die Wechselvorrichtung (14) bei der Übergabe eine Drehbewegung ausführt.

3. Verfahren nach Anspruch 1 oder 2, **dadurch gekennzeichnet, dass** vor, bzw. nach der Übergabe der Werkzeuge (3, 3') von der Wechselvorrichtung (14) an die Werkzeugmaschine (5) eine Übergabe von Werkzeugen (3, 3') aus dem Magazin (1) an den Zwischenspeicher (11) und umgekehrt erfolgt.

4. Verfahren nach einem der Ansprüche 1 bis 3, **dadurch gekennzeichnet, dass** der Zwischenspeicher (11) bei der Übergabe von Werkzeugen (3, 3') an das Magazin (1) eine Drehbewegung ausführt.

5. Verfahren nach einem der Ansprüche 1 bis 4, **dadurch gekennzeichnet, dass** die Werkzeuge (3, 3') den Zwischenspeicher (11) entsprechend ihrer Aufeinanderfolge des Einsatzes in der Werkzeugmaschine (5) gespeichert werden.

6. Verfahren nach einem der Ansprüche 1 bis 5, **dadurch gekennzeichnet, dass** die Werkzeuge (3, 3') über Adapter in dem Zwischenspeicher (11) aufgenommen und gespeichert werden.

7. Verfahren nach einem der Ansprüche 1 bis 6, **dadurch gekennzeichnet, dass** die Werkzeuge (3, 3') vor einer Rückführung in das Magazin (1) eine Überprüfung und/oder Vermessung unterworfen werden.

8. System zum Be- und Entladen einer Werkzeugmaschine (5) mit Werkzeugen (3, 3'), mit einem als Matrixmagazin ausgebildeten Magazin (1) zum Lagern der Werkzeuge (3, 3') einem Zwischenspeicher (11) zur kurzfristigen Bereitstellung von Werkzeugen (3, 3'), wobei zusätzlich eine Wechselvorrichtung (14) vorgesehen ist, die dazu ausgebildet ist, Werkzeuge (3, 3') gleichzeitig aus dem Zwischenspeicher (11) und der Werkzeugmaschine (5) zu entnehmen, bzw. in diese einzusetzen, **dadurch gekennzeichnet, dass** eine Vorrichtung zum Verschwenken der Werkzeuge (3, 3') vorgesehen ist.

9. System nach Anspruch 8, **dadurch gekennzeichnet, dass** die Wechselvorrichtung (14) als zweiarmiger Hebel ausgebildet ist, der um eine Mittelachse schwenkbar ist und an seinen Enden mit Werkzeughalterungen versehen ist.

10. System nach Anspruch 8 oder 9, **dadurch gekennzeichnet, dass** der Zwischenspeicher (11) als mehrarmiger drehbarer Hebel ausgebildet ist, dessen Arme sternförmig in gleichmäßigen Abständen von einer Nabe abstehen.

11. System nach einem der Ansprüche 8 bis 10, **dadurch gekennzeichnet, dass** Adapter (17) zu Aufnahme der Werkzeuge (3, 3') aus dem Magazin (1), sowie zur Lagerung, bzw. Aufnahme in dem Zwischenspeicher (11) vorgesehen sind.

12. System nach einem der Ansprüche 8 bis 11, **dadurch gekennzeichnet, dass** zusätzlich eine Vorrichtung (15) zum Überprüfen und/oder Vermessen von Werkzeugen (3, 3') nach einem Einsatz vorgesehen ist und dass zusätzlich eine Eintrags- und Ausbringungsvorrichtung (16) für verbrauchte, bzw. beschädigte Werkzeuge (3') und neue Werkzeuge (3) vorgesehen ist.

13. System nach einem der Ansprüche 8 bis 12, **dadurch gekennzeichnet, dass** die Vorrichtung (6) zum Transportieren der Werkzeuge (3, 3') als automatisch gesteuerter Roboter ausgebildet ist.

14. System nach einem der Ansprüche 8 bis 13, **dadurch gekennzeichnet, dass** das Magazin (1) aus einem Schichtaufbau von Blechen (20) gebildet ist.
